# EUROPÄISCHE PATENTSCHRIFT

(11) **EP 2 121 800 B1**
(45) Veröffentlichungstag und Bekanntmachung des Hinweises auf die Patenterteilung: **22.12.2010**
(21) Anmeldenummer: 08701293.6
(22) Anmeldetag: 08.01.2008
(51) Int. Cl.: C08G 63/183, C09J 167/02

(54) **KRISTALLINE COPOLYESTER MIT GUTER LÖSLICHKEIT IN NICHT HALOGENIERTEN LÖSUNGSMITTELN UND IHRE VERWENDUNG**
CRYSTALLINE COPOLYESTERS HAVING GOOD SOLUBILITY IN UNHALOGENATED SOLVENTS AND THEIR USE
COPOLYESTERS CRISTALLINS PRÉSENTANT UNE BONNE SOLUBILITÉ DANS DES SOLVANTS NON HALOGÉNÉS ET LEUR UTILISATION

(30) Priorität: 26.01.2007 DE 102007004102
(43) Veröffentlichungstag der Anmeldung: 25.11.2009
(73) Patentinhaber: Evonik Degussa GmbH, 45128 Essen (DE)
(72) Erfinder: BRENNER, Gabriele, 48249 Dülmen (DE); KOSCHABEK, René, 68259 Mannheim (DE); BECKER, Georg, 58453 Witten (DE)
(86) Internationale Anmeldenummer: PCT/EP2008/050119
(87) Internationale Veröffentlichungsnummer: WO 2008/090015

(56) Entgegenhaltungen:
- EP-A- 0 530 626
- GB-A- 1 489 208
- US-A- 3 329 740
- US-A- 3 436 301
- US-A- 4 166 895
- DATABASE WPI Week 200241 Derwent Publications Ltd., London, GB; AN 2002-376730 XP002471657 -& JP 2002 047471 A (NIPPON ESTER CO LTD) 12. Februar 2002 (2002-02-12)
- DATABASE WPI Week 200365 Derwent Publications Ltd., London, GB; AN 2003-682675 XP002471658 -& JP 2003 013032 A (DAINIPPON INK & CHEM INC) 15. Januar 2003 (2003-01-15)
- DATABASE WPI Week 198713 Derwent Publications Ltd., London, GB; AN 1987-089958 XP002471659 -& JP 62 039680 A (UNITIKA LTD) 20. Februar 1987 (1987-02-20)
- DATABASE WPI Week 200421 Derwent Publications Ltd., London, GB; AN 2004-218174 XP002471660 -& JP 2003 327676 A (TOYOBO KK) 19. November 2003 (2003-11-19) in der Anmeldung erwähnt
- DATABASE WPI Week 199431 Derwent Publications Ltd., London, GB; AN 1994-253065 XP002471661 -& JP 06 184515 A (NIPPON SYNTHETIC CHEM IND CO) 5. Juli 1994 (1994-07-05) in der Anmeldung erwähnt

## Beschreibung

Die vorliegende Erfindung betrifft die Herstellung von hochmolekularen, kristallinen Copolyestern mit guter Löslichkeit in nicht halogenierten und nicht aromatischen Lösungsmitteln und ihre Verwendung in Klebstoffen.

Copolyester basierende Klebstoffe finden u. a. aufgrund ihres breiten Haftungsspektrums und ihrer guten mechanischen Eigenschaften vielfältigen Einsatz in der Klebstoffindustrie. Die Applikationen erfolgen zwar zunehmend aus der Schmelze, es gibt aber dennoch einen großen Bedarf an Klebstoffen, die aus Lösung aufgetragen werden können. Unter Umweltgesichtspunkten sind nicht halogenierte und aromatenfreie Lösungsmittel wie Methylethylketon und Ethylacetat bevorzugt. Die Lösung wird in der Regel durch Auflösen des festen Copolyestergranulats in dem gewünschten Lösungsmittel hergestellt, wobei der Festkörpergehalt aus Wirtschaftlichkeitsgründen möglichst hoch sein soll. Je höher der Festkörpergehalt ist, umso weniger Lösungsmittel muss bei Herstellung der Verklebung verdampft werden. Ein weiterer Vorteil besteht beim Transport und der Lieferung von festem Granulat anstelle von Lösungen.

Typische Anwendungen sind die Herstellung von Laminaten aus Kunststoff- und/oder Metallfolien für flexible Verpackungen, gedruckte elektronische Schaltungen sowie flexible Flachkabel und die Profilummantelung.
Amorphe Copolyester sind relativ gut in nicht halogenierten Lösungsmitteln löslich. Bei einer Glastemperatur (Tg) unterhalb 30 °C lassen sie sich aber nicht mehr granulieren und können nur in unhandlichen Platten oder in Blockform ausgetragen werden. Da sie zudem oberflächenklebrig sind, müssen die Platten während der Lagerung mit Trennfolie versehen werden, um ein Verblocken zu vermeiden. Vor Herstellung der Lösung müssen die Trennfolien aufwendig entfernt werden. Die amorphen Niedrig-Tg Copolyester weisen gute Haftungseigenschaften auf und verleihen dem Klebstoff Flexibilität.

Kristalline Copolyester lassen sich zwar gut granulieren, sind aber nicht löslich in nicht halogenierten Lösungsmitteln.

Eine Angabe zur Löslichkeit von amorphen und kristallinen Copolyestern in typischen halogenierten und nicht halogenierten Lösungsmitteln findet sich in dem Lieferprogramm "DYNAPOL S Copolyesters" der Degussa GmbH.

Die JP 06184515 beschreibt einen gesättigten Copolyester, der aus Bernsteinsäure oder Adipinsäure, Terephthalsäure, Isophthalsäure, 1,4- Butandiol, 1,6- Hexandiol, Ethylenglykol und Cyclohexandimethanol besteht. Der Copolyester ist nur in Mischungen mit hohem Aromatengehalt aus 50 bis 90 % Toluol und 10- 50 % Ketonen löslich. In einem Ausführungsbeispiel beträgt die Schmelzenthalpie gemessen nach der DSC-Methode 14,3 J/g. Der Festkörpergehalt des Copolyesters in einer Mischung aus 80 % Toluol und 20 % Methylethylketon beträgt 20%.

In JP2003327676 wird ein kristalliner Copolyester beschrieben, der aus Adipinsäure, Terephthalsäure, Hexahydro-terephthalsäure, 1,4-Butandiol, 1,6-Hexandiol, Cyclohexandimethanol und Trimellitsäureanhydrid erhalten werden kann und löslich ist in Mischungen von Lösungsmitteln wie Methylethylketon, Cyclohexanon, Tetrahydrofuran, Ethylacetat mit aromatischen Lösungsmitteln, vorzugsweise Toluol. In einer Ausführungsform beträgt die Schmelzenthalpie 9 J/g. Das Molekulargewicht wird mit 25 000 angeben. Eine Lösung mit einem Festkörpergehalt von 25 % in einem Gemisch aus 80 % Toluol und 20 % Methylethylketon ist stabil.

Aufgabe der vorliegenden Erfindung war es, einen kristallinen hochmolekularen Polyester zu entwickeln, der mindestens mit einem Festkörpergehalt von 30 % in nicht halogenierten und aromatenfreien Lösungsmitteln, wie z. B. Methylethylketon, Ethylacetat und Tetrahydrofuran, gelöst werden kann und gleichzeitig eine Kristallinität aufweist, die eine Granulierung möglich macht. Die Lösung soll lagerstabil sein und innerhalb 24 Stunden nicht gelieren. Der Copolyester soll zudem eine gute Haftung zu diversen Substraten, speziell zu Kunststoffen und metallischen Untergründen aufweisen.

Überraschenderweise wurde gefunden, dass Copolyester aus 20 - 50 mol-%, bevorzugt 30 -45 mol-% Terephthalsäure, 20 - 50 Mol-%, bevorzugt 25 - 40 Mol% Isophthalsäure und/oder Phthalsäure, 10 - 30 Mol-%, bevorzugt 15 - 25 Mol-% linearen aliphatischen Dicarbonsäuren mit 9 - 20 Kohlenstoffatomen, 1 - 20 Mol-%, bevorzugt 5 -15 Mol-% Dimerfettsäure, und einem oder mehreren Glykolen granulierbar und ausreichend kristallin sind und mit einem Festkörpergehalt von mindestens 30 Gew.-%, vorzugsweise 30 bis 35 Gew.-%, in nicht halogenierten und nicht aromatischen Lösungsmitteln gemäß Anspruch 1 gelöst werden können, das heißt eine Lösung aus 100 Gew.-% Festkörper und Lösungsmittel enthält mindestens 30 Gew.-%, vorzugsweise 30 bis 35 Gew.-% Festkörper, also Copolyester. Zur Einstellung des gewünschten Festkörpergehalts wird die entsprechende Granulatmenge in eine verschließbare Glasflasche eingewogen und mit Lösungsmittel auf 100 Gewichtsteile aufgefüllt. Das Gemisch wird 1 bis 24 Stunden, bevorzugt 1 bis 15 Stunden bei 25 bis 50 °C, bevorzugt bei 35 bis 50 °C auf einem Schüttelgerät oder auf einem Rollbock gelöst. Die Herstellung der Lösung kann beispielsweise auch in einem Rührbehälter erfolgen.

Granulierbar im Sinne der vorliegenden Erfindung bedeutet, dass die Copolyesterschmelze durch verschiedene dem Fachmann bekannte Granulierungsverfahren wie z. B. Stranggranulierung, Vertropfungsgranulierung, Pastillierung, Bruchgranulierung in einen körnigen, schüttbaren Feststoff überführt werden kann.

Gegebenenfalls können anstelle der freien Säuren auch ihre veresterbaren Derivate wie z.B. entsprechende Niedrigalkylester eingesetzt werden.

In besonderen Ausführungsformen können die aromatischen Dicarbonäuren Terephthalsäure, Isophthalsäure und/oder Phthalsäure bis zu 5 Mol-%, bevorzugt bis zu 2 Mol-% durch verzweigte Polycarbonsäuren ersetzt sein.

Bevorzugt sind die ein oder mehreren Glykole der erfindungsgemäßen Copolyester ausgewählt aus 90-100 Mol-%, bevorzugt 92 - 99 Mol-% eines oder mehrerer linearer aliphatischer Glykole und maximal bis zu 10 Mol-%, bevorzugt 1- 8 Mol-% eines oder mehrerer Polyalkylenglykole.
In besonderen Ausführungsformen können die linearen aliphatischen Glykole bis zu 5 Mol-%, bevorzugt bis zu 2 Mol-% durch verzweigte Polyole ersetzt sein.

Geeignete lineare aliphatische Dicarbonsäuren sind z. B. Azelainsäure, Sebazinsäure, Undecandisäure, Tetradecandisäure, Dodecandisäure, Oktadecandisäure und Mischungen davon.
Als Dimerfettsäuren bezeichnet man allgemein technische Gemische, die durch Oligomerisierung von ungesättigten Fettsäuren hergestellt werden. Durch Fraktionierung können Dimere abgetrennt werden. Als Ausgangsstoffe werden ungesättigte C-12 bis C-22- Fettsäuren wie Ölsäure oder Linolsäure eingesetzt. Vorzugsweise enthalten die Dimerfettsäuren einen Dimeranteil von mindestens 90 %. Als Dimerfettsäure können Verkaufsprodukte der Firma Uniqema mit dem Handelsnamen Pripol, der Firma Oleon mit dem Handelsnamen Radiacid, der Firma Arizona Chemical mit dem Handelsnamen Unidyme, der Firma Cognis mit dem Handelsnamen Empol u. ä. zum Einsatz kommen.

Beispiele für verzweigte Polycarbonsäuren sind Trimellitsäureanhydrid und Pyromellitsäureanhydrid.

Beispiele für lineare aliphatische Glykole sind z. B. 1,2-Ethylenglykol, 1,2-Propandiol, 1,3-Propandiol, 1,4-Butandiol, 1,5-Pentandiol, 1,6-Hexandiol, 1,9-Nonandiol, 1,12-Dodecandiol, 2,2'-Dimethylpropylenglykol, 1,3-Butylethylpropandiol, Methylpropandiol, Methylpentandiole und Mischungen daraus.

Beispiele für verzweigte Polyole sind Trimethylolpropan, Pentaerythrol und Mischungen daraus.

Beispiele für Polyalkylenglykole sind Polyethylenglykol, Polypropylenglykol und Polybutylenglykol und Mischungen hieraus. Die eingesetzten Polyalkylenglykole sollten Molmassen zwischen 400 und 2000 g/mol besitzen.

Nicht halogenierte und aromatenfreie Lösungsmittel sind Methylethylketon, Tetrahydrofuran, Cyclohexanon, Ethylacetat, Propylacetat, Butylacetat und Mischungen daraus, wobei Methylethylketon und/ oder Ethylacetat bevorzugt sind.

Insbesondere bevorzugte Copolyester der vorliegenden Erfindung weisen folgende Zusammensetzung auf: 38 bis 43 Mol-% Terephthalsäure, 25 bis 30 Mol-% Isophthalsäure, 20 bis 25 Mol-% Sebacinsäure, 8 bis 12 Mol-% Dimerfettsäure, wobei die Summe der Polycarbonsäuren 100 Mol-% ist sowie 80 bis 90 Mol-% 1,4-Butandiol, 10 bis 20 Mol-% 1,6-Hexandiol und maximal bis zu 5 Mol-% Polymethylenglykol mit einem Molekulargewicht von 1000 g/mol, wobei die Summe der Glykole 100 Mol-% ist.

Der kristalline Copolyester weist insbesondere folgende Eigenschaften auf:
eine Molmasse (M_{w}) von 25000 bis 70000 g/mol, bevorzugt 40000 bis 60000 g/mol,
eine Glasübergangstemperatur (Tg) von 0 °C bis -50 °C, bevorzugt -10 °C bis -40 °C,
eine Schmelztemperatur (Tm) von 30 °C bis 110 °C, bevorzugt 40 bis 90 °C, und eine Schmelzenthalpie (ΔHm) von 1 bis 20 J/g, bevorzugt 3 bis 15 J/g.

Die Molmasse Mw ist das massenmittlere Molgewicht und wird mittels Gelpermeationschromatographie (GPC) bestimmt. Die Charakterisierung erfolgt in Tetrahydrofuran als Eluent nach DIN 55672-1. Angabe in g/mol.

Die Glasübergangstemperatur, Schmelztemperatur und Schmelzenthalpie werden nach der DSC-Methode DIN 53675 (1.Aufheizung) bestimmt. Die Aufheizrate beträgt 10 °C/Minute. Bei der Schmelztemperatur wird der höchste Peak angegeben.

Die erfindungsgemäßen Copolyester werden mittels etablierter Techniken für (Poly-)Kondensationsreaktionen hergestellt. Sie können z. B. durch Kondensation von Polyolen und Polycarbonsäuren oder deren Ester, Anhydride oder Säurechloride in einer Inertgasatmosphäre bei Temperaturen von 100 bis 280 °C, vorzugsweise von 150 bis 270 °C innerhalb von 3 bis 30 Stunden, in der Schmelze oder in azeotroper Fahrweise gewonnen werden, wie es z. B. in "Methoden der Organischen Chemie (Houben-Weyl)", Bd. 14/2, 1-5, 21-23, 40-44, Georg Thieme Verlag, Stuttgart, 1963, bei C. R. Martens, Alkyl Resins, 51 -59, Reinhold Plastics Appl., Series, Reinhold Publishing Comp., New York, 1961 oder in DE 27 35 497 und 30 04 903, beschrieben ist. Typische Katalysatoren sind Organotitan- oder- zinnverbindungen, wie z. B. Tetrabutyltitanat oder Dibutylzinnoxid. Wahlweise können die Copolyester ohne oder mit Fahrhilfsmitteln oder Additiven wie z. B. Antioxidantien oder Kristallisationsbeschleunigem ausgestattet sein.

Die erfindungsgemäßen Copolyester weisen gute Haftungswerte auf und eignen sich sehr gut für die Formulierung und Verwendung in Klebstoffen, insbesondere für Elektronikanwendungen wie z.B. für die Herstellung von Flachkabeln oder gedruckten Schaltungen, als Klebstoff in Verpackungen und Profilummantelung. Ein weiteres Anwendungsgebiet ist die Verwendung als Dichtmasse sowie als Haftvermittler.

Ebenfalls Gegenstand der vorliegenden Erfindung sind Klebstoffe enthaltend die erfindungsgemäßen Copolyester. Die erfindungsgemäßen Klebstoffe haben den Vorteil, dass sie sehr flexibel sind, einen geringen Volumenschrumpf und sehr hohe Haftung zu einer Vielzahl von Substraten wie Holz, Papier, Leder, Textilien, Faserverbundstoffe, besonders zu Kunststoffen und metallischen Untergründen, insbesondere zu PET und Kupfer aufweisen.

Grundsätzlich kann es sich um jede dem Fachmann bekannte Art von Klebstoffen handeln, insbesondere handelt es sich um lösungsmittelhaltige Klebstoffe, ganz besonders bevorzugt um Klebstoffe, die in Methylethylketon und/oder Ethylacetat gelöst sind.
Der Anteil der erfindungsgemäßen Copolyester in dem lösungsmittelhaltigen Klebstoff beträgt 1 bis 40 Gewichtsteile, bevorzugt 10 bis 35 Gewichtsteile und ganz besonders bevorzugt 30 bis 35 Gewichtsteile.
Die Klebstoffe können neben den erfindungsgemäßen Copolyestern weitere Zusätze enthalten. Als Zusätze seien beispielhaft Polymere wie z. B. amorphe Copolyester, Pigmente bzw. Füllstoffe wie z. B.Talkum, Siliciumdioxid, Titandioxid, Ruß und/oder farbige Pigmente, Flammschutzmittel wie z. B. Zinkborate, Ammoniumpolyphosphate und/oder Antimonoxide, Vernetzer wie z. B. Polyisocyanate und/oder blockierte Polyisocyanate und/ oder Alterungschutz- und Hilfsmittel genannt.

Die erfindungsgemäßen Klebstoffe eignen sich in besonderer Weise für den Einsatz im Elektronikbereich, Baubereich, in der Automobilindustrie, Verpackungsindustrie, Holz- und Möbelindustrie, Textilindustrie, graphischen Industrie, Schuhindustrie und im Fensterbau.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen. Nachfolgend wird die vorliegende Erfindung anhand von Beispielen näher erläutert. Alternative Ausführungsformen der vorliegenden Erfindung sind in analoger Weise erhältlich.

### Beispiele:

### Allgemeine Herstellvorschrift der erfindungsgemäßen Polyester

In einem 12 I-Reaktor aus rostfreiem Stahl werden 1,72 kg Dimethylterephthalat (0,38 Mol), 2,17 kg 1,4-Butandiol (1,03 Mol), 0,64 kg 1,6-Hexandiol (0,23 Mol) und 0,60 kg Polybutylenglykol (0,03 Mol), 4 g Tetrabutyltitanat eingefüllt.

Nach der Verdrängung der Luft durch Stickstoff wird unter Normaldruck aufgeheizt, bei einer Innentemperatur von 120 bis 130°C das Rührwerk eingeschaltet und bis zu einer End-Temperatur von 180 °C 0,72 I Destillat (im wesentlichen Methanol) mit einer Kolonnenkopftemperatur von 62 bis 67 °C entfernt. Unter Umgehung der Kolonne werden weitere 0,15 I Destillat erhalten. Danach wird auf 160 °C abgekühlt, entgegen einem starken Stickstoffstrom 1,12 kg Isophthalsäure, 1,08 kg Sebazinsäure (0,23 Mol), 1,33 kg Dimerfettsäure (0,20 Mol) und 8 g Talkum zugesetzt, die Temperatur auf 190 °C bis 200 °C eingestellt und 0,52 I Destillat (im Wesentlichen Wasser) über die Kolonne abgetrieben. Danach wird die Temperatur auf 240 °C angehoben und zugleich Vakuum angelegt. Bei 240 °C und einem Druck von unter 1,5·10⁻³ bar wird gerührt. Im Anschluss wird das Vakuum durch Stickstoff aufgehoben, die Schmelze abgelassen und granuliert.

### Beispiel 1:

38 Mol-% Terephthalsäure
29 Mol-% Isophthalsäure
23 Mol-% Sebazinsäure
10 Mol-% Dimerfettsäure

80 Mol-% 1,4-Butandiol
18 Mol-% 1,6-Hexandiol
2 Mol-% Polybutylenglykol 1000

Analytische Daten: Mw 51700, Tg -35 °C; Tm 70 °C; ΔHm 9 J/g
Mw= Molekulargewicht, GPC-Methode (gegen Polystyrol)
Tg= Glasübergangstemperatur, DSC-Methode
Tm= Schmelztemperatur, DSC-Methode
ΔHm= Schmelzenthalpie, DSC-Methode

### Beispiel 2:

38 Mol-% Terephthalsäure
29 Mol-% Isophthalsäure
23 Mol-% Sebazinsäure
10 Mol-% Dimerfettsäure

80 Mol-% 1,4-Butandiol
18 Mol-% 2,2'-Dimethylpropylenglykol
2 Mol-% Polybutylenglykol 1000

Analytische Daten: Mw 52000, Tg -30 °C; Tm 50 °C; ΔHm 3 J/g

### Beispiel 3:

38 Mol-% Terephthalsäure
29 Mol-% Isophthalsäure
23 Mol-% Sebazinsäure
10 Mol-% Dimerfettsäure

80 Mol-% 1,4-Butandiol
19 Mol-% 1,6-Hexandiol
1 Mol-% Polybutylenglykol 1000

Analytische Daten: Mw 52700, Tg -28 °C; Tm 72°C; ΔHm 9 J/g

### Herstellung der Vergleichsbeispiele analog Beispiel 1

### Vergleichsbeispiel V1:

68 Mol-% Terephthalsäure
32 Mol-% Azelainsäure

50 Mol-% Monoethylenglykol
50 Mol-% 2,2'-Dimethylpropylenglykol

Analytische Daten: Mw 53200, Tg 12 °C, kein Schmelzpeak
Der Copolyester ist dauerklebrig und nicht granulierbar.

### Vergleichsbeispiel V2:

50 Mol-% Terephthalsäure
50 Mol-% Adipinsäure
100 Mol-% Monoethylenglykol

Analytische Daten: Mw 47900, Tg 0 °C; Tm 120°C; ΔHm 13 J/g

### Prüfung der Löslichkeit

Zur Herstellung der Lösungen werden 6 g Copolyester und 14 g Lösungsmittel in eine verschließbare 30 ml Glasflasche eingewogen. Das Gemisch wird 12 Stunden bei 35 °C in einem Inkubator mit Schütteleinsatz gelöst. Die Löslichkeit wird sofort nach Erkalten der Lösung auf Raumtemperatur und nach Lagerung der Lösung bei Raumtemperatur nach den folgenden Merkmalen beurteilt.
Homogene Lösung= ++
Ungelöstes Granulat= --

| Polyester | | 1 | 2 | 3 | V1 | V2 |
|---|---|---|---|---|---|---|
| Methylethylketon | Sofort | ++ | ++ | ++ | ++ | -- |
| | 1 Tag | ++ | ++ | ++ | ++ | -- |
| | 1 Woche | ++ | ++ | ++ | ++ | -- |
| Ethylacetat | Sofort | ++ | ++ | ++ | ++ | -- |
| | 1 Tag | ++ | ++ | ++ | ++ | -- |
| | 1 Woche | ++ | ++ | ++ | ++ | -- |

| | | | | | | |
|---|---|---|---|---|---|---|
| V1 ist nicht granulierbar | | | | | | |

### Prüfung der Haftung

Mittels Kastenrakel werden ca. 70 g/m² einer 30 %-igen Copolyesterlösung in MEK (bei Vergleichsbeispiel V2 in Dichlormethan) auf ein zu verklebendes Substrat aufgetragen. Das Lösungsmittel wird 30 Minuten bei Raumtemperatur und weitere 30 Minuten bei 60 °C abgelüftet. Das Auftragsgewicht nach Entfernen des Lösungsmittels beträgt ca. 20 g/m². Nachdem das beschichtete Substrat auf Raumtemperatur abgekühlt ist, erfolgt die Verklebung mit dem zweiten, unbeschichteten Substrat in einem Siegelgerät innerhalb 30 Sekunden bei einer Temperatur von 120 °C und einem Druck von 400 N. Aus den verklebten Substraten werden nach zwei Tagen 15 mm breite Streifen geschnitten, deren Schälfestigkeit mit einer Zugprüfmaschine in einem Winkel von 90° als Maß für die Haftung ermittelt wird. Angegeben wird die Maximalkraft Fmax in N.

### Schälfestigkeit Fmax (N)

| Substrat | Beispiel | 1 | 2 | 3 | V1 | V2 |
|---|---|---|---|---|---|---|
| PET/ PET | | 17 | 23 | 22 | 14 | 15 |
| PET/ Cu | | 12 | 11 | 11 | 14 | 6 |

| | | | | | | |
|---|---|---|---|---|---|---|
| Eingesetzte Substrate: PET= Mylar-Folie, 125 µm dick Cu= Kupferfolie, unbeschichtet, 40 µm dick | | | | | | |

## Patentansprüche

1. Kristalliner, granulierbarer Copolyester,
bestehend aus
20 bis 50 Mol-% Terephthalsäure,
20 bis 50 Mol-% Isophthalsäure und/oder Phthalsäure,
10 bis 30 Mol-% einer linearen, aliphatischen Dicarbonsäure mit 9 bis 20 Kohlenstoffatomen,
1 bis 20 Mol-% Dimerfettsäure
und einem oder mehreren Glykolen,
die mit einem Festkörpergehalt von mindestens 30 Gew.-%, vorzugsweise 30 bis 35 Gew.-% in nicht halogenierten und nicht aromatischen Lösungsmitteln ausgewählt aus Methylethylketon, Tetrahydrofuran, Cyclohexanon, Ethylacetat, Propylacetat, Butylacetat und Mischungen daraus, gelöst werden können.

2. Kristalliner Copolyester gemäß Anspruch 1, **dadurch gekennzeichnet, dass** die ein oder mehreren Glykole ausgewählt sind aus 90 bis 100 Mol.-% eines oder mehrerer linearen, aliphatischen Glykole und maximal bis zu 10 Mol.-% eines oder mehrerer Polyalkylenglykole.

3. Kristalliner Copolyester gemäß Anspruch 1 oder 2,
**dadurch gekennzeichnet,**
**dass** der Copolyester folgende Eigenschaften aufweist:
eine Molmasse (M_{w}) von 25000 bis 70000 g/mol,
eine Glasübergangstemperatur von 0°C bis -50 °C
eine Schmelztemperatur von 30 °C bis 110°C
und eine Schmelzenthalpie von 1 bis 20 J/g.

4. Kristalliner Copolyester gemäß einem oder mehreren der Ansprüche 1 bis 3,
**dadurch gekennzeichnet,**
**dass** als lineare aliphatische Dicarbonsäure Azelainsäure, Sebazinsäure, Undecandisäure, Dodecandisäure, Tetradecandisäure, Oktadecandisäure und der Mischungen davon eingesetzt werden.

5. Kristalliner Copolyester gemäß einem oder mehreren der Ansprüche 2 bis 4,
**dadurch gekennzeichnet,**
**dass** als lineare aliphatische Glykole 1,2-Ethylenglykol,
1,2-Propandiol, 1,3-Propandiol, 1,4-Butandiol, 1,5-Pentandiol, 1,6-Hexandiol, 1,9-Nonandiol, 1,12-Dodecandiol, 2,2'-Dimethylpropylenglykol, 1,3-Butylethylpropandiol, Methylpropandiol, Methylpentandiole und Mischungen daraus eingesetzt werden.

6. Kristalliner Copolyester gemäß einem oder mehreren der Ansprüche 2 bis 5,
**dadurch gekennzeichnet,**
**dass** als Polyalkylenglykol Polyethylenglykol, Polypropylenglykol und Polybutylenglykol und Mischungen davon eingesetzt werden.

7. Kristalliner Copolyester gemäß Anspruch 6,
**dadurch gekennzeichnet,**
**dass** das Polyalkylenglykol Molmassen zwischen 400 und 2000 g/mol besitzt.

8. Verwendung eines Copolyesters gemäß einem oder mehreren der Ansprüche 1 bis 7 in Klebstoffen.

9. Verwendung des Copolyesters gemäß einem oder mehreren der Ansprüche 1 bis 7 in Dichtstoffen oder als Haftvermittler.

10. Klebstoffe enthaltend Copolyester gemäß einem oder mehreren der Ansprüche 1 bis 7.

## Claims

1. Crystalline pelletizable copolyester,
composed of
20 to 50 mol% of terephthalic acid,
20 to 50 mol% of isophthalic acid and/or phthalic acid,
10 to 30 mol% of a linear aliphatic dicarboxylic acid having 9 to 20 carbon atoms,
1 to 20 mol% of dimer fatty acid
and one or more glycols,
which can be dissolved with a solids content of at least 30%, preferably 30% to 35%, by weight in non-halongenated and non-aromatic solvents selected from methyl ethyl ketone, tetrahydrofuran, cyclohexanone, ethyl acetate, propyl acetate, butyl acetate and mixtures thereof.

2. Crystalline copolyester according to Claim 1, **characterized in that** the one or more glycols are selected from 90 to 100 mol% of one or more linear aliphatic glycols and not more than up to 10 mol% of one or more polyalkylene glycols.

3. Crystalline copolyester according to either of Claims 1 and 2,
**characterized in that** the copolyester has the following properties:
a molar mass (M_{w}) of 25 000 to 70 000 g/mol,
a glass transition temperature of 0°C to -50°C
a melting temperature of 30°C to 110°C
and an enthalpy of fusion of 1 to 20 J/g.

4. Crystalline copolyester according to one or more of Claims 1 to 3,
**characterized in that** azelaic acid, sebacic acid, undecanedioic acid, dodecanedioic acid, tetradecanedioic acid, octadecanedioic acid and mixtures thereof are used as linear aliphatic dicarboxylic acid.

5. Crystalline copolyester according to one or more of Claims 2 to 4,
**characterized in that** 1,2-ethylene glycol, 1,2-propanediol, 1,3-propanediol, 1,4-butanediol, 1,5-pentanediol, 1,6-hexanediol, 1,9-nonanediol, 1,12-dodecanediol, 2,2'-dimethylpropylene glycol, 1,3-butylethylpropanediol, methylpropanediol, methylpentanediols and mixtures thereof are used as linear aliphatic glycols.

6. Crystalline copolyester according to one or more of Claims 2 to 5,
**characterized in that** polyethylene glycol, polypropylene glycol and polybutylene glycol and mixtures thereof are used as polyalkylene glycol.

7. Crystalline copolyester according to Claim 6, **characterized in that** the polyalkylene glycol possesses molar masses of between 400 and 2000 g/mol.

8. Use of a copolyester according to one or more of Claims 1 to 7 in an adhesive.

9. Use of a copolyester according to one or more of Claims 1 to 7 in a sealant or as an adhesion promoter.

10. Adhesive comprising a copolyester according to one or more of Claims 1 to 7.

## Revendications

1. Copolyesters cristallins granulables, constitués de
20 à 50 % en moles d'acide téréphtalique,
20 à 50 % en moles d'acide isophtalique et/ou d'acide phtalique,
1 0 à 3 0 % en moles d'un acide dicarboxylique aliphatique linéaire ayant de 9 à 20 atomes de carbone, 1 à 20 % en moles d'acide gras dimère
et d'un ou plusieurs glycols,
qui peuvent être dissous à une teneur en matière solide d'au moins 30 % en poids, de préférence de 30 à 35 % en poids dans des solvants non aromatiques et non halogénés, choisis parmi la méthyléthylcétone, le tétrahydrofuranne, la cyclohexanone, l'acétate d'éthyle, l'acétate de propyle, l'acétate de butyle et des mélanges de ceux-ci.

2. Copolyester cristallin selon la revendication 1, **caractérisé en ce que** lesdits un ou plusieurs glycols sont choisis parmi 90 à 100 % en moles d'un ou plusieurs glycols aliphatiques linéaires et au maximum jusqu'à 10 % en moles d'un ou plusieurs polyalkylèneglycols.

3. Copolyester cristallin selon la revendication 1 ou 2, **caractérisé en ce que** le copolyester présente les propriétés suivantes :
une masse moléculaire (M_{w}) de 25 000 à 70 000 g/mole,
une température de transition vitreuse de 0 °C à -50 °C
une température de fusion de 30 °C à 110 °C
et une enthalpie de fusion de 1 à 20 J/g.

4. Copolyester cristallin selon une ou plusieurs des revendications 1 à 3, **caractérisé en ce qu'**on utilise comme acide dicarboxylique aliphatique linéaire l'acide azélaïque, l'acide sébacique, l'acide undécanedioïque, l'acide dodécanedioïque, l'acide tétradécanedioïque, l'acide octadécanedioïque et des mélanges de ces acides.

5. Copolyester cristallin selon une ou plusieurs des revendications 2 à 4, **caractérisé en ce qu'**on utilise comme glycols aliphatiques linéaires le 1,2-éthylèneglycol, le 1,2-propanediol, le 1,3-propanediol, le 1,4-butanediol, le 1,5-pentanediol, le 1,6-hexanediol, le 1,9-nonanediol, le 1,12-dodécanediol, le 2,2'-diméthylpropylèneglycol, le 1,3-butyléthylpropanediol, le méthylpropanediol, les méthylpentanediols et des mélanges de ceux-ci.

6. Copolyester cristallin selon une ou plusieurs des revendications 2 à 5, **caractérisé en ce qu'**on utilise comme polyalkylèneglycol le polyéthylèneglycol, le polypropylèneglycol et le polybutylèneglycol et des mélanges de ceux-ci.

7. Copolyester cristallin selon la revendication 6, **caractérisé en ce que** le polyalkylèneglycol présente des masses moléculaires comprises entre 400 et 2 000 g/mole.

8. Utilisation d'un copolyester selon une ou plusieurs des revendications 1 à 7 dans des adhésifs.

9. Utilisation du copolyester selon une ou plusieurs des revendications 1 à 7 dans des matières d'étanchéité ou comme promoteur d'adhérence.

10. Adhésifs contenant des copolyesters selon une ou plusieurs des revendications 1 à 7.
